# EUROPEAN PATENT APPLICATION

(11) **EP 2 133 732 A2**
(43) Date of publication of application: **16.12.2009**
(21) Application number: 09162396.7
(22) Date of filing: 10.06.2009
(51) Int. Cl.: G02F 1/00

(54) **Delay interferometer**

(30) Priority: 10.06.2008 JP 2008152240
(71) Applicant: Yokogawa Electric Corporation, Musashino-shi Tokyo 180-8750 (JP)
(72) Inventor: Asano, Junichiro, Tokyo 180-8750 (JP); Iemura, Koki, Tokyo 180-8750 (JP); Hihara, Mamoru, Tokyo 180-8750 (JP)
(74) Representative: Grünecker, Kinkeldey, Stockmair & Schwanhäusser Anwaltssozietät

(57) **Abstract**

In a delay interferometer, a Michelson delay interferometer unit is mounted on a package made of a Kovar material. The Michelson delay interferometer unit has optical components including a beam splitter which splits an optical signal, reflectors which reflect the split optical signals, and an optical phase adjusting plate which is inserted into an optical path of the optical signal, and which is used for temperature compensation. The delay interferometer includes a glass substrate on which the optical components are bonded and mounted, and an elastic member which is interposed between the delay interferometer unit configured by the optical components mounted on the glass substrate, and a bottom portion of the package.

## Description

### TECHNICAL FIELD

The present disclosure relates to temperature compensation of a delay interferometer.

### RELATED ART

The technique in which the temperature dependency of variation of the transmission center wavelength is suppressed by an optical phase adjusting plate that finely adjusts the optical path length of a spatial optical system such as a Michelson delay interferometer unit is well known. For example, Patent Reference 1 discloses in detail the technique.

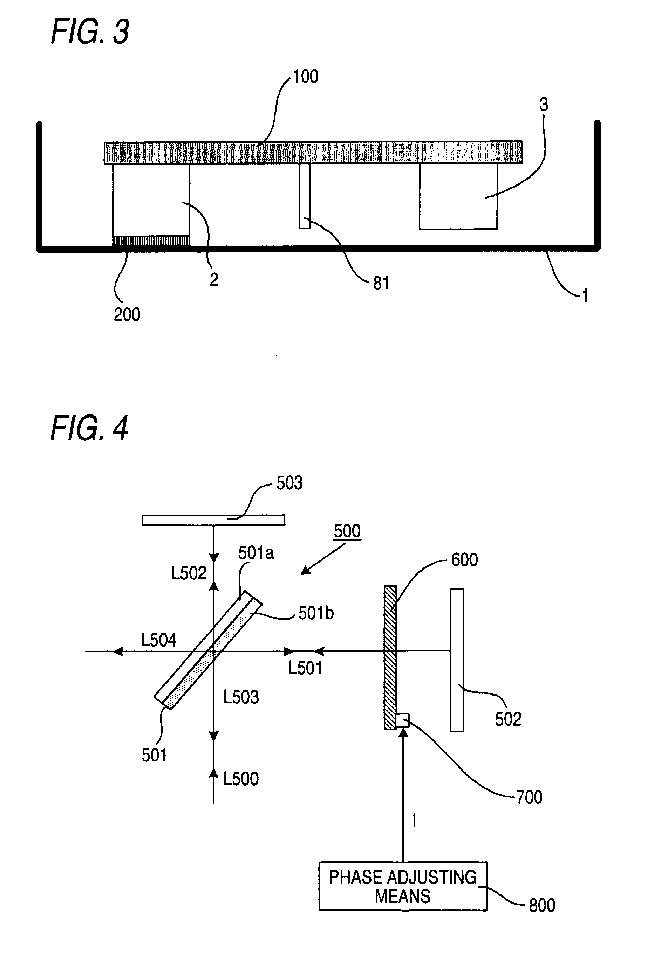

Fig. 4 is a functional block diagram illustrating the operation of an optical phase adjusting plate which is used in a Michelson delay interferometer unit. The Michelson delay interferometer unit 500 includes a beam splitter 501 and planar mirrors 502, 503.

The beam splitter 501 is a planar member in which a dielectric multilayer film 501b is formed on a glass substrate 501a. An incident light beam L500 enters the beam splitter 501 at a predetermined angle (45°). The beam splitter 501 reflects the incident light beam L500 and also allows to transmit therethrough to split the light beam into split light beams L501, L502 having a predetermined intensity ratio (1 : 1).

The beam splitter 501 multiplexes the split light beams L501, L502 which are reflected respectively from the planar mirrors 502, 503, to cause the light beams to interfere with each other, and splits the interference light beam which is obtained as a result of the interference, at a predetermined intensity ratio (1 : 1).

According to the configuration, the planar mirrors 502, 503 are positioned so that the optical path length of the split light beam L501 is longer by a predetermined length than that of the split light beam L502. Therefore, the split light beam L501 is delayed by a predetermined time from the split light beam L502.

Thereafter, the split light beams are multiplexed by the beam splitter 501 to interfere with each other, whereby the phases of the split light beam L502 and the split light beam L501 which is delayed by the predetermined time are compared with each other. Interference light beams having an intensity which corresponds to a result of the comparison are output as output light beams L503, L504.

For purposes such as that of compensating delay time variation due to temperature variation, an optical phase adjusting plate is inserted between the beam splitter 501 and the planar mirror 502, and finely adjusts the optical path length of the split light beam L501, i.e., the delay time, thereby performing the phase adjustment of the optical path of the spatial optical system.

Specifically, the optical phase adjusting plate has a configuration where a chip heater 700 serving as heating means is bonded onto an optical substrate 600 made of Si or the like. The optical substrate 600 can change the refractive index by means of the thermo-optical effect. The chip heater 700 is heated by a control current I supplied from phase adjusting means 800, and the optical path length of the split light beam L501 which passes through the optical substrate 600 is adjusted by a thermal response of the optical substrate 600.

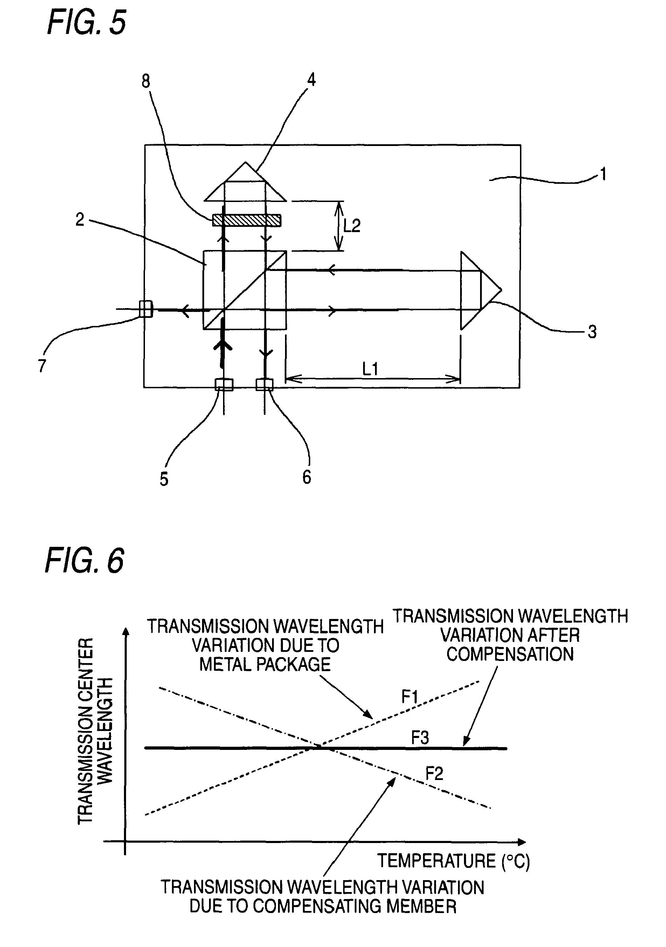

Fig. 5 is a plan view showing the related-art configuration of a Michelson delay interferometer unit including an optical phase adjusting plate. A beam splitter 2, a first reflector 3, a second reflector 4, an input port 5, a first output port 6, and a second output port 7 are mounted in a package 1. The package 1 is made of Kovar or the like which has a low coefficient of thermal expansion.

The distance between the beam splitter 2 and the first reflector 3 is indicated as L1, and the distance between the beam splitter 2 and the second reflector 4 is indicated as L2.
Interference is caused by the difference of the distances. In the example, the optical phase adjusting plate 8 is inserted between the beam splitter 2 and the second reflector 4, and controls the optical path length by the temperature, thereby compensating the optical path variation due to thermal expansion of the package 1 made of Kovar or the like. Alternatively, the optical phase adjusting plate 8 may be inserted between the beam splitter 2 and the first reflector 3.

According to the principle of the related-art temperature compensation, with respect to the optical path length variation due to thermal expansion of the metal package, the temperature independency is realized by placing a compensating member configured by an optical phase adjusting plate 8 made of a thermo-optical effect material which has temperature dependency of the refractive index, in at least one of a portion between the beam splitter 2 and the first reflector 3, and that between the beam splitter 2 and the second reflector 4.

Fig. 6 is a characteristic graph illustrating the ideal concept of the temperature compensation by an optical phase adjusting plate. With respect to the temperature characteristic F1 of a metal package indicated by a broken line, the optical path length is adjusted by a compensating member having an opposite temperature characteristic F2, thereby realizing the temperature independency characteristic F3.

Namely, an elongation on the side of L1 is compensated by an elongation on the side of L2 and the temperature dependency of the refractive index of the optical phase adjusting plate 8. Patent References 1 and 2 technically show in detail a logical analysis of compensation in the case where a Si single crystal is used as a material of a high-refractive index medium of the optical phase adjusting plate 8.

[Patent Reference 1] JP-A-2007-151026
[Patent Reference 2] JP-A-2007-306371

The temperature compensation by the related-art technique has the following problems.
(1) In the related-art technique, with respect to Kovar (coefficient of linear expansion: 6 × 10⁻⁶/K) which is the material of a package, an optical phase adjusting plate made of Si (temperature dependence coefficient of refractive index: 10⁻⁴) is used as a compensating member. The thermal expansion and the temperature dependency of refractive index contain high order components which cannot be easily measured. Therefore, the temperature compensation is designed assuming that the thermal expansion and the temperature dependency of refractive index are linear parameters.

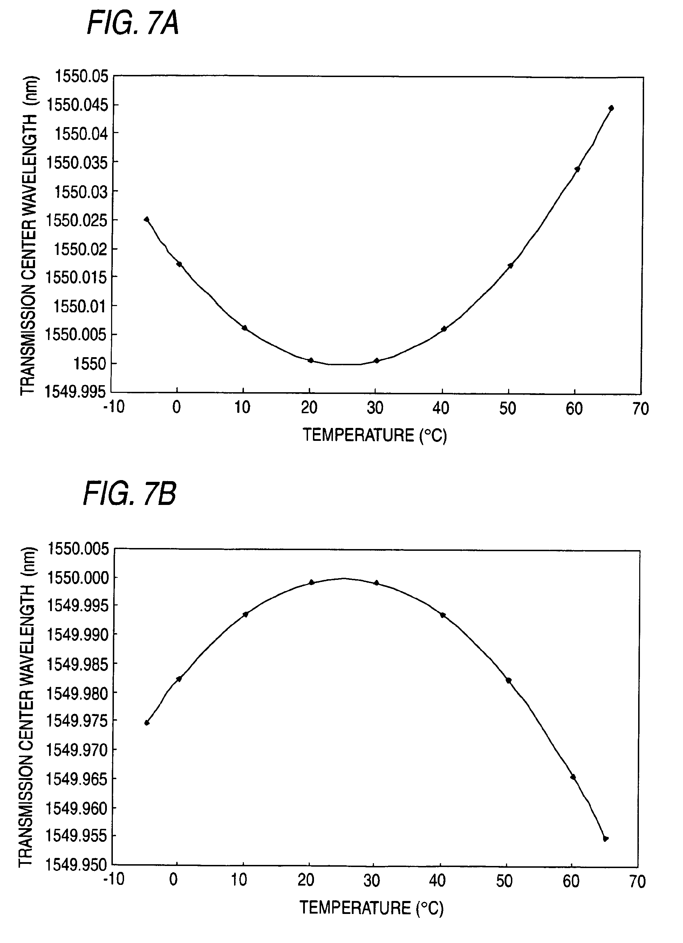

Figs. 7A and 7B are actual temperature characteristic diagrams after the temperature compensation which is designed under this assumption. Actually, the temperature characteristic shows a quadratic curve such as shown in Figs. 7A and 7B, and wavelength variation of about 50 pm at 0 to 70°C occurs.

(2) When stress is applied to the package, the stress is transmitted to optical components fixed thereto, thereby producing a problem in that transmission wavelength variation occurs. A delay interferometer is not used independently, and used while incorporated into, for example, a transmitting and receiving module for optical communication.

When a delay interferometer is fixed to a board of a transmitting and receiving module, the force due to fastening fixation, and thermal expansion/contraction due to a temperature change are transmitted to the metal package of the delay interferometer, and transmission wavelength variation occurs.

### SUMMARY

Exemplary embodiments of the present invention provide a delay interferometer in which an influence on optical components due to temperature variation of a package is suppressed, and a compensation effect owing to an optical phase adjusting plate can be further improved.

The invention is configured in the following manners.
(1) A delay interferometer comprises:
   a package;
   a Michelson delay interferometer unit mounted on the package, the Michelson delay interferometer unit having optical components including a beam splitter which splits an optical signal, reflectors which reflect the split optical signals, and an optical phase adjusting plate which is inserted into an optical path of the optical signal;
   a glass substrate on which the optical components are bonded and mounted; and
   an elastic member which is interposed between the Michelson delay interferometer unit, and a bottom portion of the package. In the delay interferometer, the package may be made of a Kovar material.

(2) In the delay interferometer of (1), the glass substrate has a coefficient of thermal expansion of 0.2 × 10⁻⁶/K or less at 0 to 85°C.

(3) In the delay interferometer of (1) or (2), at a mounting position of the beam splitter of the glass substrate, the elastic member is interposed between the glass substrate and the bottom portion of the package.

(4) In the delay interferometer of (1) or (2), the elastic member is interposed between the beam splitter and the bottom portion of the package.

(5) In the delay interferometer of any one of (1) to (4), the optical components of the Michelson delay interferometer unit include a plurality of the optical phase adjusting plates which are inserted respectively into optical paths of the split optical signals.

(6) In the delay interferometer of (5), the optical phase adjusting plates which are inserted respectively into the optical paths of the split optical signals are different in thickness in an optical axis direction from each other, and temperature compensation is performed based on the thickness difference.

Other features and advantages may be apparent from the following detailed description, the accompanying drawings and the claims.

### BRIEF DESCRIPTION OF THE DRAWINGS

Fig. 1 is a plan view showing an embodiment of a delay interferometer to which the invention is applied.
Fig. 2 is a side view of Fig. 1.
Fig. 3 is a side view showing another embodiment of a delay interferometer to which the invention is applied.
Fig. 4 is a functional block diagram illustrating the operation of an optical phase adjusting plate which is used in a Michelson delay interferometer unit.
Fig. 5 is a plan view showing a related-art configuration of a Michelson delay interferometer unit.
Fig. 6 is a characteristic graph illustrating the ideal concept of the temperature compensation by an optical phase adjusting plate.
Figs. 7A and 7B are actual temperature characteristic diagrams after the temperature compensation.

### DETAILED DESCRIPTION

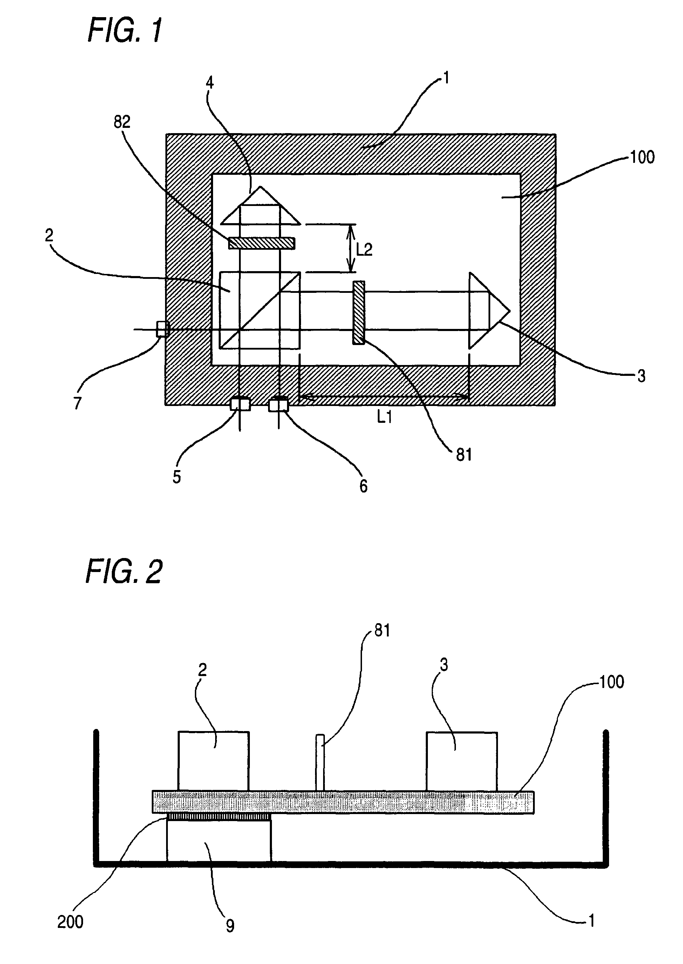

Hereinafter, the invention will be described in more detail with reference to the drawings. Fig. 1 is a plan view showing an embodiment of a delay interferometer to which the invention is applied, and Fig. 2 is a side view of the delay interferometer. The same components as those of the related-art configuration which has been described with reference to Fig. 5 are denoted by the identical reference numerals, and their description is omitted.

A first feature of the configuration of the invention is that optical components such as a beam splitter 2, reflectors 3 and 4, and an optical phase adjusting plate 81 or 82 are bonded and fixed onto a low-thermal expansion glass substrate 100. As a low-thermal expansion glass material which can be employed in the invention, ZERODUR (registered trademark) manufactured by SCHOTT AG, or similar glass having a very low coefficient of thermal expansion (the coefficient of thermal expansion is preferably 0.2 × 10⁻⁶/K or less at 0 to 85°C) is useful.

A second feature of the configuration of the invention is that, as shown in Fig. 2, the low-thermal expansion glass substrate 100 on which the optical components are mounted is fixed through an elastic member 200 to a supporting member 9 formed on a bottom portion of the package.
The elastic member of the present invention is an elastic member, which can suppress deformation and stress caused by the thermal expansion coefficient difference due to the difference between a material (for example, Kovar) of the package and a material of the glass substrate on which the optical components are mounted. Further, the elastic member of the present invention is made of a material, which can prevent portions of the elastic member which are bonded to the package and the glass substrate from separating from the package and the glass substrate.

The position where the glass substrate 100 is fixed to the package 1 by the elastic member 200 coincides with that where the beam splitter 2 is fixed to the low-thermal expansion glass substrate 100. This causes influences on the optical components, in other words, transmission wavelength variation, due to temperature variation of the package 1 or external stress applied to the package 1, to be suppressed to a minimum level. Further, it is possible to attain an effect that the variation of the transmission center wavelength is reduced to 10 pm or less in a temperature range of -5 to 70°C in contrast to the related-art configuration where the variation is from about 40 to 60 pm.

A third feature of the configuration of the invention is that the optical phase adjusting plates 81, 82 made of the same material (for example, Si) are inserted respectively into the both optical paths L1, 12, thereby offsetting the changes of the refractive indices of the optical phase adjusting plates due to the temperature.

In the optical phase adjusting plates 81, 82 which are inserted respectively into the optical paths of the split optical signals, their thicknesses in the optical axis direction are different from each other. Therefore, temperature compensation can be performed based on the thickness difference.

In the case where a thin optical phase adjusting plate which has a thickness of 100 µm, and which is hardly processed is required, when one of the plates has a thickness of 1,100 µm and the other plate has a thickness of 1,000 µm, for example, it is possible to equivalently realize a thin optical phase adjusting plate which has a thickness of 100 µm. This contributes to cost reduction. As mentioned above, in the case where a thin optical phase adjusting plate which is hardly processed is required, when optical phase adjusting plates which are inserted respectively into optical paths of split optical signals are made different in thickness in the optical axis direction from each other, temperature compensation can be performed based on the thickness difference. Therefore, a thin optical phase adjusting plate can be equivalently realized, thereby contributing to cost reduction.

Fig. 3 is a side view showing another embodiment of a delay interferometer to which the invention is applied. The embodiment is characterized in the configuration where the optical components on the low-thermal expansion glass substrate 100 shown in Fig. 2 are placed in an upside down manner, and the block of the beam splitter 2 is directly fixed to the bottom portion of the package 1 through the elastic member 200. This configuration exerts the same effects as that of Fig. 2.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A delay interferometer comprising:
a package;
a Michelson delay interferometer unit mounted on the package, the Michelson delay interferometer unit having optical components including a beam splitter which splits an optical signal, reflectors which reflect the split optical signals, and an optical phase adjusting plate which is inserted into an optical path of the optical signal;
a glass substrate on which the optical components are bonded and mounted; and
an elastic member which is interposed between the Michelson delay interferometer unit, and a bottom portion of the package.

2. A delay interferometer according to claim 1, wherein the glass substrate has a coefficient of thermal expansion of 0.2 × 10⁻⁶/K or less at 0 to 85°C.

3. A delay interferometer according to claim 1 or 2, wherein, at a mounting position of the beam splitter of the glass substrate, the elastic member is interposed between the glass substrate and the bottom portion of the package.

4. A delay interferometer according to claim 1 or 2, wherein the elastic member is interposed between the beam splitter and the bottom portion of the package.

5. A delay interferometer according to any one of claims 1 to 4, wherein the optical components of the Michelson delay interferometer unit include a plurality of the optical phase adjusting plates which are inserted respectively into optical paths of the split optical signals.

6. A delay interferometer according to claim 5, wherein the optical phase adjusting plates which are inserted respectively into the optical paths of the split optical signals are different in thickness in an optical axis direction from each other, and temperature compensation is performed based on the thickness difference.

7. A delay interferometer according to claim 1, wherein the package is made of a Kovar material.
